# EUROPÄISCHE PATENTSCHRIFT

(11) **EP 1 038 718 B1**
(45) Veröffentlichungstag und Bekanntmachung des Hinweises auf die Patenterteilung: **04.06.2003**
(21) Anmeldenummer: 00103184.8
(22) Anmeldetag: 17.02.2000
(51) Int. Cl.: B60K 25/02, F02B 67/04

(54) **Anordnung und antriebsmässige Anbindung von Nebenaggregaten an einer Brennkraftmaschine**
Auxiliaries drive arrangement and attachment to an internal combustion engine
Agencement pour l'entraînement d'accessoires et montage sur le moteur à combustion interne

(30) Priorität: 17.03.1999 DE 19911924
(43) Veröffentlichungstag der Anmeldung: 27.09.2000
(73) Patentinhaber: MAN Nutzfahrzeuge Aktiengesellschaft, 80976 München (DE)
(72) Erfinder: Rühmann, Gerd, Dipl.-Ing., 82229 Seefeld (DE)

(56) Entgegenhaltungen:
- EP-A- 0 334 823
- DE-A- 1 919 685
- DE-A- 2 150 054
- DE-A- 19 745 997
- DE-A- 19 748 423
- US-A- 4 321 896

## Beschreibung

Die Erfindung betrifft eine Anordnung und antriebsmäßige Anbindung von Nebenaggregaten an einer Brennkraftmaschine, insbesondere Dieselmotor in einem Lastkraftwagen oder Omnibus. Die Merkmale des Oberbegriffes des Anspruchs 1 sind aus der US 4321 896 bekamnt.

In der Regel werden Nebenaggregate wie Anlasser, Lichtmaschine, Luftpresser, Lenkhilfepumpe, Wasserpumpe, Klimakompressor, gegebenenfalls auch eine hydrostatische Pumpe/Maschine für Arbeitsgeräte-/Plattformbetätigung jeweils einzeln außen an verschiedenen Stellen einer Brennkraftmaschine angeordnet. Dies bedeutet jeweils eigene Befestigungsvorrichtungen und/oder Vorkehrungen für ihre Befestigung an der Brennkraftmaschine. Auch die antriebsmäßige Anbindung dieser Nebenaggregate an die Kurbelwelle und/oder die Nockenwelle(n) oder das Schwungrad gestaltet sich in der Regel sehr schwierig und wegen der räumlich verteilten Anordnung der Nebenaggregate auch als sehr aufwendig und teuer. Außerdem erfordert diese verteilte Anordnung der Nebenaggregate einschließlich. der zu ihnen hinführenden Antriebsstränge relativ viel Bauraum, was z. B. bei Brennkraftmaschinen, die in Frontlenker-Lastkraftwagen unterhalb des Fahrerhauses oder in Omnibussen unterhalb der Rücksitzbank eingebaut werden müssen, nicht sehr günstig ist, weil es die Gestaltungsfreiheit im Umfeld der Brennkraftmaschine im Hinblick auf die Unterbringung anderer Aggregate, wie Kühler, Lüfter, Turbolader und dergleichen erheblich einschränkt.

Es ist daher Aufgabe der Erfindung, eine Anordnung und antriebsmäßige Anbindung von Nebenaggregaten an einer Brennkraftmaschine zu schaffen, die extrem platzsparend ist und eine einfache Montage sowie Wartung und Pflege ermöglicht.

Diese Aufgabe ist erfindungsgemäß durch die im Anspruch 1 gekennzeichnete Anordnung und antriebsmäßige Anbindung der Nebenaggregate an einer Brennkraftmaschine gelöst.

Vorteilhafte Ausgestaltungen und Weiterbildungen dieser Lösung sind in den Unteransprüchen gekennzeichnet.

Durch die erfindungsgemäße Zusammenfassung verschiedener Nebenaggregate und deren Antriebsverbindungen benachbart übereinander entlang zweier paralleler Zentralachsen in bzw. an einem Modulgehäuse, das auch einen Zahnradtrieb für die Herstellung der Antriebsverbindung zur Kurbelwelle aufnimmt, ergibt sich eine bisher noch nicht erreichte Kompaktheit und zugleich größtmögliche Platzersparnis. Die Modul-Teile sind beim Zusammenbau gut handhabbar, was die kostenintensive Montagezeit reduziert. Die erfindungsgemäße Art der antriebsmäßigen Anbindung der Nebenaggregate an die Kurbelwelle trägt außerdem aufgrund des minimalen Getriebeaufwandes auch entscheidend mit zu einer Kostenreduzierung und damit zu einem sehr günstigen Gesamtergebnis bei.

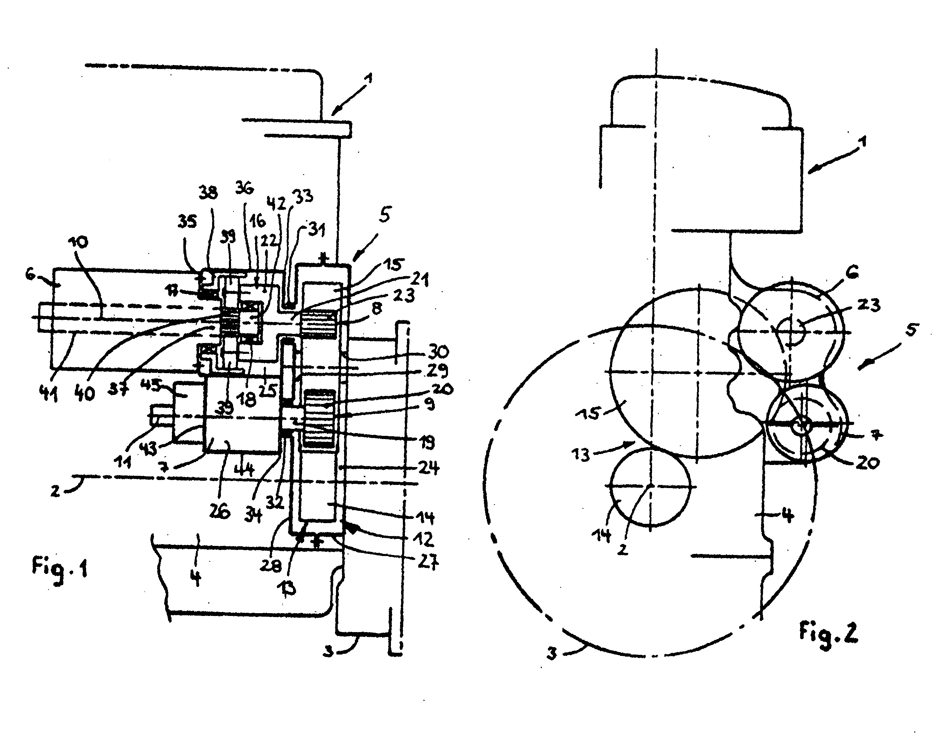

Nachstehend ist die erfindungsgemäße Lösung anhand eines in der Zeichnung dargestellten Ausführungsbeispiels noch näher erläutert. In der Zeichnung ist dieses Ausführungsbeispiel in Fig. 1 schematisch in Seitenansicht und in Fig. 2 schematisch in Vorderansicht gezeigt.

In der Zeichnung sind mit 1 eine Brennkraftmaschine, bei der es sich vorzugsweise um einen Dieselmotor in einem Lastkraftwagen oder Omnibus handelt, mit 2 deren Kurbelwelle und mit 3 ein Schwungradgehäuse bezeichnet, das stimseitig am Zylinderblock 4 der Brennkraftmaschine 1 befestigt ist und ein an der Kurbelwelle 2 angeschlossenes Schwungrad aufnimmt.

Mit 5 ist in seiner Gesamtheit ein erfindungsgemäßer Nebenaggregatemodul bezeichnet. Dieser umfaßt wenigstens zwei verschiedene Nebenaggregate, nämlich eine sowohl als Anlasser als auch als Generator betreibbare Elektromaschine 6 und einen Luftpresser 7. Der Elektromaschine 6 ist eine Antriebsverbindung 8 und dem Luftpresser 7 ist eine; Antriebsverbindung 9 zugeordnet. Innerhalb des Nebenaggregatemoduls 5 sind die wenigstens zwei Nebenaggregate - Elektromaschine 6 und Luftpresser 7 - und deren Antriebsverbindungen 8, 9 benachbart übereinander in zwei zueinander und zur Achse der Kurbelwelle 2 parallelen Zentralachsen 10, 11 in bzw. an einem Modulgehäuse 12 angeordnet. Letzteres ist seitlich außen an der Brennkraftmaschine 1, dort vorzugsweise am Zylinderblock 4, sowie rückseitig am Schwungradgehäuse 3 angeschlossen und erstreckt sich teilweise innerhalb des axialen Projektionsschattens des Schwungradgehäuses 3. Mit 13 ist ein im Modulgehäuse 12 aufgenommener Zahnradtrieb 13 bezeichnet, der die antriebsmäßige Verbindung von der Kurbelwelle 2 zu den Antriebsverbindungen 8, 9 der Nebenaggregate 6, 7 herstellt und aus zwei miteinander kämmenden Zahnrädern 14, 15 unterschiedlichen Durchmessers besteht. Das durchmesserkleinere Zahnrad 14 sitzt drehfest auf der Kurbelwelle 2, das im Durchmesser etwa doppelt so große Zahnrad 15 dagegen ist oberhalb des ersten Zahnrades 14 etwas seitlich versetzt zu diesem angeordnet und innerhalb des Modulgehäuses 12 gelagert.

Im einzelnen sind innerhalb des Nebenaggregatemoduls 5 längs der einen Zentralachse 10 die Elektromaschine 6 und als deren Antriebsanbindung 8 ein Planetengetriebe 16 mit zwei Freilaufkupplungen 17, 18, längs der anderen Zentralachse 11 dagegen der Luftpresser 7 sowie als dessen Antriebsverbindung ein auf dessen verlängerter Welle 19 sitzendes Zahnrad 20 angeordnet. Dieses Zahnrad 20 steht ebenso wie ein auf der Welle 21 des Planetenradträgers 22 des Planetengetriebes 16 sitzendes Zahnrad 23 mit dem zweiten, durchmessergrößeren Zahnrad 15 des Zahnradtriebes 13 in Antriebsverbindung.

Das Modulgehäuse 12 weist drei Kammern 24, 25, 26 auf, wobei in der ersten Kammer 24 der Zahnradtrieb 13 mit seinen beiden Zahnrädern 14, 15, in der zweiten Kammer 25 das Planetengetriebe 16 sowie die beiden Freilaufkupplungen 17, 18 und in der dritten Kammer 26 der vorzugsweise durch einen solchen der Flügelzellenbauart realisierte Luftpresser 7 untergebracht ist. Das Modulgehäuse 12 ist durch mehrere Gehäuseteile gebildet, die so gestaltet sind, daß der Ein- bzw. Anbau der Nebenaggregate 6, 7 und zugehörigen Antriebsverbindungen 8, 9 sowie des Zahnrades 15 des Zahnradtriebs 13 einfach und schnell durchführbar und die Gehäuseteile selbst günstig miteinander verbindbar sind.

Im dargestellten Ausführungsbeispiel begrenzen zwei topfförmige Gehäuseteile 27, 28 die Kammer 24 des Modulgehäuses 12. Beide Gehäuseteile 27, 28 sind in einer Vertikalquertrennebene über Flansche und geeignete Verschraubungen miteinander verbunden. Das erste, vordere Gehäuseteil 27 ist dabei rückseitig am Schwungradgehäuse 3, gegebenenfalls auch an der Brennkraftmaschine 1 befestigt. Außerdem weisen beide Gehäuseteile 27, 28 zueinander fluchtende Lagerstellen 29, 30 für die Lagerung des zweiten Zahnrades 15 des Zahnradantriebes 13 auf. Das zweite Gehäuseteil 28 weist außerdem Durchtrittsöffnungen 31, 32 für die Lagefixierung zweier weiterer Gehäuseteile 33, 34 an ihm sowie für die Hindurchführung der Wellen 19 bzw. 21 auf.

Das dritte Gehäuseteil 33 besitzt eine vordere Stirnwand, die zusammen mit einer hinteren Stirnwand 35 und einer im Querschnitt kreisringzylindrischer Außenwand 36 die zweite Kammer 25 begrenzt. Dabei ist das dritte Gehäuseteil 33 an der Rückseite des zweiten Gehäuseteils 28 angeflanscht.

An der hinteren Stirnwand 35 des dritten Gehäuseteils 33 ist die Elektromaschine 6 befestigt. Diese ragt mit einem stirnseitig vorspringenden Hals 37 in die zweite Kammer 25 des Modulgehäuses 12 hinein. Auf dem Hals 37 ist die erste Freilaufkupplung 17 angeordnet, die radial außen mit der Nabe am Hohlrad 38 des Planetengetriebes 16 zusammenwirkt. Das Hohlrad 38 ist innerhalb der zweiten Kammer 25 gelagert. Mit der Innenverzahnung des Hohlrades 38 stehen Planetenräder 39 in Eingriff, die am Planetenradträger 22 gelagert sind und außerdem mit einer Verzahnung 40 in Eingriff stehen, die an der koaxial zur Zentralachse 10 angeordneten Welle 41 der Elektromaschine 6 gegeben ist. Vor dieser Verzahnung 40 ist auf einem Ansatz 42 am freien Ende der Welle 41 der Elektromaschine 6 die zweite Freilaufkupplung 18 angeordnet, welche radial außen mit dem sie axial übergreifenden Planetenradträger 22 zusammenwirkt.

Das vierte Gehäuseteil 34 besitzt eine vordere Stirnwand, die zusammen mit einer hinteren Stirnwand 43 und einer Außenwand 44 die dritte Kammer 25 begrenzt. Das vierte Gehäuseteil 34 ist mit seiner vorderen Stirnwand an der Rückseite des zweiten Gehäuseteils 28 angeflanscht. Die die Kammer 26 begrenzenden Wände des vierten Gehäuseteils 34 sind generell im Hinblick auf die Bauart des darin unterzubringenden Luftpressers 7 gestaltet.

Die koaxial zur Zentralachse 11 angeordnete Welle 19 des Luftpressers 7 kann ebenso wie die koaxial zur Zentralachse 10 angeordnete Welle 41 der Elektromaschine 6 über das jeweilige hintere Ende hinaus verlängert, also nach Art einer Durchtriebswelle ausgebildet sein und grundsätzlich das Anschlußorgan und die Antriebsquelle für weitere Nebenaggregate bilden. Im dargestellten Beispiel ist am hinteren Ende des Luftpressers 7 eine von dessen verlängerter Welle 19 her angetriebene Lenkhilfepumpe 45 angebaut. Außer der Lenkhilfepumpe 45 könnte solchermaßen auch eine Kühlmittelumwälzpumpe, ein Klimakompressor, eine hydrostatische Pumpe/Maschine am Luftpresser 7 oder der Elektromaschine 6 angeschlossen sein.

Der Luftpresser 7 ist über den Zahnradtrieb 13; 14, 15 und das Zahnrad 20 seiner Antriebsverbindung 9 mit einer Übersetzung von ca. i = 1,5 antreibbar.

Der Elektromaschine 6 ist eine Steuer- und Regeleinrichtung zugeordnet, über die deren Wirkungsweise sowohl im Anlasser - als auch Generatorbetrieb managebar ist

Im Anlasserbetrieb ist die Brennkraftmaschine 1 durch die Elektromaschine 6 über das Planetengetriebe 16, das Zahnrad 23 und den Zahnradtrieb 13; 14, 15 startbar. Dabei werden über die Verzahnung 40 an der Welle 41 der Elektromaschine 6 die Planetenräder 39 angetrieben, das Hohlrad 38 ist über den ersten Freilauf 17 festgehalten, der Planetenradträger 22 dreht sich mit einer Übersetzung von ca. i = 6 und das am freien Ende der Planetenradträgerwelle 21 sitzende Zahnrad 23 setzt mit einer weiteren Übersetzung von ca. i = 3,5 über den Zahnradtrieb 13; 14, 15 die Kurbelwelle 2 der Brennkraftmaschine 1 in Bewegung. Während eines Anlaßvorgangs ist somit eine Gesamtübersetzung von ca. i_{ges} = 21 wirksam. Dabei dreht während eines Anlaßvorgangs die Welle 41 bei gleicher Drehrichtung um einen Faktor von ca. 6 schneller als der Planetenradträger 22, so daß die zweite Freilaufkupplung 18 stets überholt wird und nicht klemmt.

Um die Brennkraftmaschine 1 starten zu können, ist ein relativ hohes Drehmoment erforderlich, so daß die erwähnte Gesamtübersetzung von besonderem Vorteil ist. Falls es sich bei der Brennkraftmaschine um einen Dieselmotor handelt, springt dieser bereits bei einer Drehzahl von 200 bis 300 1/min an, was bedeutet, daß aufgrund dieser großen Übersetzung die zulässige Maximaldrehzahl der Elektromaschine 6 nicht überschritten wird. Sofort nach einem als wirksam bzw. erfolgt detektierten Start der Brennkraftmaschine 1 wird die Elektromaschine 6 von Anlasser - auf Generatorbetrieb umgeschaltet.

Während des Hochlaufens der Drehzahl der Brennkraftmaschine 1 bis Leerlaufdrehzahl fällt die Drehzahl der Elektromaschine 6 zunächst ab, bis bei einer Übersetzung i = 3,5 Gleichlauf besteht.

Im Generatorbetrieb muß dann bis zur Höchstdrehzahl der Brennkraftmaschine 1, im Fall eines Dieselmotors ca. 2000 1/min, die Elektromaschine 6 bei einer Übersetzung i = 3,5 mitlaufen. Während dieses Generatorbetriebes ist die Elektromaschine 6 demzufolge von der Kurbelwelle 2 der Brennkraftmaschine 1 her Ober den Zahnradtrieb 13; 14, 15, das Zahnrad 23 und das Planetengetriebe 16 angetrieben. Dabei treibt das Zahnrad 23 über die Welle 21 den Planetenradträger 22 an, die zweite Freilaufkupplung 18 klemmt und verblockt/kuppelt so die Welle 41 der Elektromaschine 6 mit dem Planetenradträger 22/Planetengetriebe 16, in welchem Fall sich die Planetenräder 39 nicht drehen und das Hohlrad 38 im gleichen Drehsinn und mit gleicher Drehzahl wie der Planetenradträger 22 bei nicht geklemmter erster Freilaufkupplung 17 dreht.

Im Gegensatz zu üblichen Starteranlagen ist mit der erfindungsgemäßen Lösung ein sehr komfortabler und geräuschfreier Übergang von Starterbetrieb zum Generatorbetrieb der Elektromaschine möglich, so daß mit einer derartigen Einrichtung ein stop-and-go-Betrieb günstig durchführbar ist, auch mit einem Abstellen der Brennkraftmaschine 1 bei einem Ampelhalt öder im Falle eines Busses an Haltestellen. Ein Neustart der Brennkraftmaschine 1 ist problemlos möglich.

Mit der erfindungsgemäßen Lösung ist es ohne weiteres auch möglich, die Elektromaschine 6 leistungsmäßig so festzulegen bzw. zu dimensionieren, daß im Generatorbetrieb eine vergleichsweise hohe elektrische Überschußenergie erzeugbar ist, die dann auch über die Elektromaschine 6 als Anfahrunterstützung oder für kurzzeitige Fahrunterstützung heranziehbar ist. Die Übersetzungen müßten dann gegebenenfalls auch diesem Einsatzfall entsprechend angepaßt werden.

## Patentansprüche

1. Anordnung und antriebsmäßige Anbindung von Nebenaggregaten an einer Brennkraftmaschine, insbesondere Dieselmotor in einem Lastkraftwagen oder Omnibus, mit einem Nebenaggregatemodul (5), in dem wenigstens zwei verschiedene Nebenaggregate (6, 7) und deren Antriebsverbindungen (8, 9) benachbart übereinander in zwei zueinander und zur Achse der Kurbelwelle (2) parallelen Zentralachsen (10, 11) in bzw. an einem Modulgehäuse (12) angeordnet sind das einen Zahnradtrieb (13; 14, 15) aufnimmt, über den die antriebsmäßige Verbindung von der Kurbelwelle (2) der Brennkraftmaschine (1) zu den Antriebsverbindungen (8, 9) der Nebenaggregate (6, 7) hergestellt ist, **dadurch gekennzeichnet, dass** das Modulgehäuse seitlich außen an der Brennkraftmaschine (1) sowie rückseitig am Schwungradgehäuse (3) angeschlossen ist.

2. Anordnung und antriebsmäßige Anbindung von Nebenaggregaten an einer Brennkraftmaschine nach Anspruch 1, **dadurch gekennzeichnet, daß** der Zahradtrieb (13) aus zwei miteinander kämmenden Zahnrädern (14, 15) unterschiedlichen Durchmessers besteht, wobei das durchmesserkleinere Zahnrad (14) drehfest auf der Kurbelwelle (2) der Brennkraftmaschine (1) sitzt und das im Durchmesser etwa doppelt so große Zahnrad (15) oberhalb und seitlich versetzt zum Zahnrad (14) angeordnet und innerhalb des Modulgehäuses (12) gelagert ist.

3. Anordnung und antriebsmäßige Anbindung von Nebenaggregaten an einer Brennkraftmaschine nach den Ansprüchen 1 und 2, **dadurch gekennzeichnet, daß** innerhalb des Nebenaggregatemoduls (5) längs der einen Zentralachse (10) als ein Nebenaggregat eine sowohl als Anlasser als auch Generator betreibbare Elektromaschine (6) sowie als deren Antriebsverbindung (8) ein Planetengetriebe (16) mit zwei Freilaufkupplungen (17, 18) und längs der anderen Zentralachse (11 ) als ein Nebenaggregat ein Luftpresser (7) sowie als dessen Antriebsverbindung (9) ein auf dessen verlängerter Welle (19) sitzendes Zahnrad (20) angeordnet sind, wobei dieses Zahnrad (20) ebenso wie ein auf der Welle (21) des Planetenradträgers (22) des Planetengetriebes (16) sitzendes Zahnrad (23) mit dem zweiten, durchmessergrößeren Zahnrad (15) des Zahnradtriebes (13) kämmt.

4. Anordnung und antriebsmäßige Anbindung von Nebenaggregaten an einer Brennkraftmaschine nach den Ansprüchen 1 bis 3, **dadurch gekennzeichnet, daß** das Modulgehäuse (12) drei Kammern (24, 25, 26) aufweist, nämlich
- eine erste Kammer (24), in der der Zahnradtrieb (13) untergebracht ist,
- eine zweite Kammer (25), in der das Planetengetriebe (16) und die beiden Freilaufkupplungen (17, 18) untergebracht sind, und
- eine dritte Kammer (26), in der ein Luftpresser (7) vorzugsweise der Flügelzellenbauart untergebracht ist.

5. Anordnung und antriebsmäßige Anbindung von Nebenaggregaten an einer Brennkraftmaschine nach Anspruch 4, **dadurch gekennzeichnet, daß** das Modulgehäuse (12) durch mehrere Gehäuseteile gebildet ist, wobei die Trenn- bzw. Verbindungsstellen so gelegt und die einzelnen Gehäuseteile so gestaltet sind, daß ein einfacher Ein- bzw. Anbau der Nebenaggregate (6, 7) sowie deren Antriebsverbindungen (8, 9) und des durchmessergrößeren Zahnrades (15) des Zahnradtriebes (13) möglich und auch die Gehäuseteile miteinander günstig verbindbar sind.

6. Anordnung und antriebsmäßige Anbindung von Nebenaggregaten an einer Brennkraftmaschine nach Anspruch 5, **dadurch gekennzeichnet, daß** die erste. Kammer (24) des Modulgehäuses (12) durch zwei topfförmige Gehäuseteile (27, 28) begrenzt ist, die in einer Vertikalquertrennebene über Flansche und geeignete Verschraubungen miteinander verbunden sind, daß das erste, vordere Gehäuseteil (27) rückseitig am Schwungradgehäuse (3), gegebenenfalls auch am Zylinderblock (4) der Brennkraftmaschine (1) befestigt ist, daß beide Gehäuseteile (27, 28) zueinander fluchtende Lagerstellen (29, 30) für die Lagerung des durchmessergrößeren Zahnrades (15) des Zahnradtriebes (13) aufweisen, und daß das zweite, hintere Gehäuseteil (28) Durchtrittsöffnungen (31, 32) für die Lagefixierung zweier weiterer Gehäuseteile (33, 34) an ihm und zur Hindurchführung der beiden Wellen (19, 21) der Antriebsverbindungen (8,9) aufweist.

7. Anordnung und antriebsmäßige Anbindung von Nebenaggregaten an einer Brennkraftmaschine nach Anspruch 6, **dadurch gekennzeichnet, daß** das dritte Gehäuseteil (33) eine vordere Stirnwand besitzt, die zusammen mit einer hinteren Stirnwand (35) und einer im Querschnitt kreiszylindrischen Außenwand (36) die zweite Kammer (25) des Modulgehäuses (12) begrenzt, wobei das dritte Gehäuseteil (33) an der Rückseite des zweiten Gehäuseteils (28) angeflanscht und an der hinteren Stirnwand (35) des dritten Gehäuseteils (33) die Elektromaschine (6) befestigt ist.

8. Anordnung und antriebsmäßige Anbindung von Nebenaggregaten an einer Brennkraftmaschine nach einem der Ansprüche 4 und 7, **dadurch gekennzeichnet, daß** die Elektromaschine (6) mit einem stirnseitig vorspringenden Hals (37) in die zweite Kammer (25) hineinragt, daß auf dem Hals (37) die erste Freilaufkupplung (17) angeordnet ist, die wiederum radial außen mit dem Hohlrad (38) des Planetengetriebes (16) zusammenwirkt, welches Hohlrad (38) innerhalb der zweiten Kammer (25) gelagert ist und mit dessen Innenverzahnung Planetenräder (39) kämmen, die am Planetenradträger (22) gelagert sind und außerdem mit einer Verzahnung (40) an der Welle (41) der Elektromaschine (6) in Triebverbindung stehen, und daß am freien Ende der Welle (41) auf einem Ansatz (42) vor der Verzahnung (40) die zweite Freilaufkupplung (18) angeordnet ist, welche radial außen mit dem Planetenradträger (22) zusammenwirkt.

9. Anordnung und antriebsmäßige Anbindung von Nebenaggregaten an einer Brennkraftmaschine nach Anspruch 6, **dadurch gekennzeichnet, daß** das vierte Gehäuseteil (34) eine vordere Stirnwand besitzt, die zusammen mit einer hinteren Stirnwand (43) und einer Außenwand (44) die dritte Kammer (25) begrenzt, wobei das vierte Gehäuseteil (34) mit seiner vorderen Stirnwand an der Rückseite des zweiten Gehhäuseteils (28) angeflanscht ist und die die Kammer (26) begrenzenden Wände generell im Hinblick auf die Bauart des darin unterzubringenden Luftpressers (7) ausgebildet sind.

10. Anordnung und antriebsmäßige Anbindung von Nebenaggregaten an einer Brennkraftmaschine nach einem oder mehreren der vorhergehenden Ansprüche, **dadurch gekennzeichnet, daß** die koaxial zur Zentralachse (11) angeordnete Welle (19) des Luftpressers (7) ebenso wie die koaxial zur Zentralachse (10) angeordnete Welle (41) der Elektromaschine (6) über das jeweilige hintere Ende hinaus verlängert ist und als Antriebsorgan für ein weiteres Nebenaggregat (45) fungiert, beispielsweise eine Lenkhilfepumpe, eine Kühlmittelumwälzpumpe, einen Klimakompressor, eine hydrostatische Pumpe/Maschine.

11. Anordnung und antriebsmäßige Anbindung von Nebenaggregaten an einer Brennkraftmaschine nach den Ansprüchen 1 bis 4 und 9, **dadurch gekennzeichnet, daß** der Luftpresser (7) über den Zahnradtrieb (13; 14, 15) und das Zahnrad (20) der Antriebsanbindung (9) mit einer Übersetzung von ca. i = 1,5 antreibbar ist.

12. Anordnung und antriebsmäßige Anbindung von Nebenaggregaten an einer Brennkraftmaschine nach einem oder mehreren der vorhergehenden Ansprüche, **dadurch gekennzeichnet, daß** die Brennkraftmaschine (1) durch die Elektromaschine (6) im Anlasserbetrieb über das Planetengetriebe (16), das Zahnrad (23) und den Zahnradtrieb (13; 14, 15) startbar ist, wobei über die Verzahnung (40) an der Welle (41) der Elektromaschine (6) die Planetenräder (39) angetrieben werden, dabei das Hohlrad (38) über den ersten Freilauf (17) abgestützt festgehalten ist, sich der Planetenradträger (22) mit einer Übersetzung ca. i = 6 dreht und das am freien Ende der Welle (21) des Planetenradträgers (22) angeordnete Zahnrad (23) mit einer weiteren Übersetzung von ca. i = 3, 5 über den Zahnradtrieb (13; 14, 15) die Kurbelwelle (2) der Brennkraftmaschine (1) in Bewegung setzt, mithin beim Anlaßvorgang eine Gesamtübersetzung ca. i_{ges} = 21 wirksam ist, und wobei während eines Anlaßvorganges-die Welle (41) der Elektromaschine (6) bei gleicher Drehrichtung um den Faktor ca. 6 schneller als der Planetenradträger (22) dreht, mithin die zweite Freilaufkupplung (18) stets überholt wird und nicht klemmt.

13. Anordnung und antriebsmäßige Anbindung von Nebenaggregaten an einer Brennkraftmaschine nach einem oder mehreren der Ansprüche 1 bis 10, **dadurch gekennzeichnet, daß** die Elektromaschine (6) im Generatorbetrieb von der Kurbelwelle (2) der Brennkraftmaschine (1) her über den Zahnradtrieb (13; 14, 15), das Zahnrad (23) und das Planetengetriebe (16) antreibbar ist, wobei das Zahnrad (23) den Planetenradträger (22) treibt, die zweite Freilaufkupplung (18) klemmt und so die Welle (41) der Elektromaschine (6) mit dem Planetenradträger (22) gekuppelt ist, in welchem Fall die Planetenräder (39) sich nicht drehen und das Hohlrad (38) im gleichen Drehsinn sowie mit gleicher Drehzahl wie der Planetenradträger (22) bei nicht geklemmter erster Freilaufkupplung (17) dreht und im Generatorbetrieb eine Übersetzung von ca. i = 3, 5 wirksam ist.

## Claims

1. Arrangement and drive connection of secondary units to an internal combustion engine, particularly a diesel engine in a truck or bus/coach, with a secondary-unit module (5) in which at least two different secondary units (6, 7) and their drive connections (8, 9) are arranged in close proximity to each other in or on a module housing (12) and above each other in two central axes (10, 11) parallel to each other and to the axis of the crankshaft (2), which flywheel housing integrates a gear drive (13; 14, 15) establishing the drive connection from the crankshaft (2) of the internal combustion engine (1) to the drive connections (8, 9) of the secondary units (6, 7), **characterised in that** said module housing (12) is connected externally to the side of the internal combustion engine (1) and to the rear side of the flywheel housing (3).

2. Arrangement and drive connection of secondary units to an internal combustion engine according to Claim 1, **characterised in that** the gear drive (13) consists of two gears (14, 15) which are of different diameter and mesh with each other, whereby the gear (14) with the smaller diameter sits firmly on the crankshaft (2) of the internal combustion engine (1) and the other gear (15), whose diameter is approximately twice as large, is arranged above and offset to one side relative to the first gear (14) and is supported in bearings inside the module housing (12).

3. Arrangement and drive connection of secondary units to an internal combustion engine according to the Claims 1 and 2, **characterised in that** within the secondary-unit module (5) an electric machine (6), which can act as a starter and as an alternator, and a planetary gear set (16) with two freewheel clutches (17, 18) for the drive connection of said electric machine (6) are arranged along a central axis (10) and that an air compressor (7) acting as secondary unit and, for its drive connection (9), a gear (20) sitting on the extended shaft (19) of said air compressor are arranged along the other central axis (11), whereby said gear (20) and a gear (23) sitting on the shaft (21) of the planetary gear carrier (22) of the planetary gear set (16) mesh with the second larger-diameter gear (15) of the gear drive (13).

4. Arrangement and drive connection of secondary units to an internal combustion engine according to the Claims 1 and 3, **characterised in that** the module housing (12) has three chambers (24, 25, 26), namely
• a first chamber (24) in which the gear drive (13) is housed,
• a second chamber (25) in which the planetary gear set (16) and the two freewheel clutches (17, 18) are housed and
• a third chamber (26) in which an air compressor (7), preferably of vane-type design, is housed.

5. Arrangement and drive connection of secondary units to an internal combustion engine according to the Claim 4, **characterised in that** module housing (12) is composed of several housing parts, the interface and connecting points being arranged and the individual housing parts being designed in such a way that easy installation or attachment of the secondary units (6, 7), of their drive connections (8, 9) and of the larger-diameter gear (15) of the gear drive (13) is possible and that the housing parts too are easy to connect with each another.

6. Arrangement and drive connection of secondary units to an internal combustion engine according to Claim 5, **characterised in that** the first chamber (24) of the module housing (12) is limited by two pot-shaped housing parts (27, 28) connected with each other in a vertical separating plane via flanges and suitable bolted connections, that the first, front housing part (27) is fastened to the rear side of the flywheel housing (3) and, if necessary, to the cylinder block (4) of the internal combustion engine (1), that both housing parts (27, 28) are provided with bearing points (29, 30), aligned with each other, for supporting the larger-diameter gear (15) of the gear drive (13) and that the second, rear housing part (28) has passage orifices (31, 32) for fastening two further housing parts (33, 34) to it (28) in a fixed position as a passage for the two shafts (19, 21) of the drive connections (8, 9).

7. Arrangement and drive connection of secondary units to an internal combustion engine according to Claim 6, **characterised in that** the third housing part (33) has a front end wall which, together with a rear end wall (35) and an outer wall (36) of circular cylindrical cross-section, limits the second chamber (25) of the module housing (12), the third housing part (33) being flanged on to the rear side of the second housing part (28) and the electric machine (6) being fastened to the rear end wall (35) of the third housing part (33).

8. Arrangement and drive connection of secondary units to an internal combustion engine according to the Claims 4 and 7, **characterised in that** the electric machine (6) has on its front end a protruding neck (37) which penetrates into the second chamber (25), that the first freewheel clutch (17) is arranged on the neck (37) and, on the outside, interacts radially with the ring gear (38) of the planetary gear (16), which ring gear (38) is mounted within the second chamber (25), its internal toothing meshing with planet gears (39) supported on the planet gear carrier (22) and also being in a drive connection with toothing (40) provided on the shaft (41) of the electric machine (6), and that the second freewheel clutch (18) is arranged on a protrusion (42) at the free end of the shaft (41) before the toothing (40) and, on the outside, acts radially together with the planet gear carrier (22).

9. Arrangement and drive connection of secondary units to an internal combustion engine according to Claim 6, **characterised in that** the fourth housing part (34) has a front end wall which, together with a rear end wall (43) and an outer wall (44) limits the third chamber (25), the front end wall of the fourth housing part (34) being flanged on to the rear side of the second housing part (28) and the design of the walls limiting the chamber (26) being adapted to the air compressor (7) housed therein.

10. Arrangement and drive connection of secondary units to an internal combustion engine according to one or several of the aforementioned Claims, **characterised in that** the shaft (19) of the air compressor (7) is coaxially arranged relative to the central axis (11), that the shaft (41) of the electric machine (6) is coaxially arranged relative to the central axis (10), that both shafts (19, 41) extend beyond each rear end and act as a drive organ for another secondary unit (45), eg a steering booster pump, a coolant circulation pump, an air-conditioner compressor, a hydrostatic pump/machine.

11. Arrangement and drive connection of secondary units to an internal combustion engine according to the Claims 1 to 4 and 9, **characterised in that** the air compressor (7) can be driven via the gear drive (13; 14, 15) and the gear (20) of the drive connection (9) with a ratio of approx. i=1.5.

12. Arrangement and drive connection of secondary units to an internal combustion engine according to one or several of the foregoing Claims, **characterised in that** the internal combustion engine (1) can be started by the electric machine (6) in the starter operating mode via the planetary gear (16), the gear (23) and the gear drive (13; 14, 15), whereby the planet gears (39) are driven via the toothing (40) on the shaft (41) of the electric machine (6), the ring gear (38) is thereby held and supported via the first freewheel clutch (17), the planet gear carrier (22) rotates with a transmission ratio of approx. i=6 and the gear (23) sitting on the free end of the shaft (21) of the planet gear carrier (22) sets in motion the crankshaft (2) of the intemal combustion engine (1) with a further transmission ratio of approx. i=3.5 via the gear drive (13; 14, 15), a total transmission ratio of approx. iₜₒₜ=21 being effective in the starting procedure during which the shaft (41) of the electric machine (6) rotates in the same direction and approx. 6 times faster than the planet gear carrier (22), so that the second freewheel clutch (18) is constantly overtaken and does not jam.

13. Arrangement and drive connection of secondary units to an internal combustion engine according to one or several of the Claims 1 to 10, **characterised in that** in the alternator operating mode the electric machine (6) can be driven from the crankshaft (2) of the internal combustion engine (1) via the gear drive (13; 14, 15), the gear (23) and the planetary gear (16), whereby the gear (23) drives the planet gear carrier (22), the second freewheel clutch (18) jams and, consequently, the shaft (41) of the electric machine (6) is engaged with the planet gear carrier (22), in which case the planet gears (39) do not rotate and the ring gear (38) rotates in the same direction and at the same speed as the planet gear carrier (22) if the first freewheel clutch (17) is not jammed and a transmission ratio of approx. i=3.5 is effective in the alternator operating mode.

## Revendications

1. Disposition et liaison par entraînement d'organes auxiliaires sur un moteur à combustion interne, en particulier sur un moteur diesel sur un camion ou autobus/car avec un module d'organes auxiliaires (5) dans lequel au minimum deux organes auxiliaires différents (6, 7) et leurs liaisons d'entraînement (8, 9) sont disposés l'un au-dessus de l'autre dans deux axes médians (10, 11) parallèles entre eux et par rapport à l'axe du vilebrequin (2) dans ou sur un carter de module (12), lequel possède un train d'engrenages (13, 14, 15) par l'intermédiaire duquel la liaison par entraînement du vilebrequin (2) du moteur à combustion interne (1) aux liaisons d'entraînement (8, 9) des organes auxiliaires (6, 7) est assurée, **caractérisée en ce que** le carter de module est relié latéralement de l'extérieur au moteur à combustion interne (1) et sur la face arrière au carter de volant (3).

2. Disposition et liaison par entraînement d'organes auxiliaires sur un moteur à combustion interne selon la revendication 1, **caractérisée en ce que** le train d'engrenages (13) est constitué de deux pignons engrenés entre eux (14, 15) et de diamètre différent, auquel cas le pignon de petit diamètre (14) est monté de manière fixe sur le vilebrequin (2) du moteur à combustion interne (1) et le deuxième pignon (15) d'un diamètre deux fois plus gros est disposé de manière décalée au-dessus et latéralement par rapport au petit pignon (14) et est logé dans le carter du module (12).

3. Disposition et liaison par entraînement d'organes auxiliaires sur un moteur à combustion interne selon les revendications 1 et 2, **caractérisée en ce que**, au sein du module d'organes auxiliaires (5), sont disposés longitudinalement à un des axes médians (10) en tant qu'organe auxiliaire une dynamo (6) fonctionnant aussi bien comme démarreur que comme alternateur ainsi que, en tant que liaison d'entraînement (8), un train planétaire (16) avec deux embrayages à roue libre (17, 18) et longitudinalement à l'autre axe médian (11) en tant qu'organe auxiliaire un compresseur d'air (7) ainsi qu'un pignon (20) fixé sur l'arbre (19) rallongé du compresseur d'air en tant que liaison d'entraînement de celui-ci (9), auquel cas ce pignon (20) est engrené avec le deuxième pignon (15) de plus grand diamètre du train d'engrenages (13) également comme un pignon (23) fixé sur l'arbre (21) du porte-satellites (22) du train planétaire (16).

4. Disposition et liaison par entraînement d'organes auxiliaires sur un moteur à combustion interne selon les revendications 1 à 3, **caractérisée en ce que** le carter de module (12) se compose de trois compartiments (24, 25, 26), à savoir
- un premier compartiment (24) dans lequel est logé le train d'engrenages (13),
- un deuxième compartiment (25) dans lequel sont logés le train planétaire (16) et les deux embrayages à roue libre (17, 18), et
- un troisième compartiment (26), dans lequel est logé un compresseur d'air (7), de préférence à ailettes.

5. Disposition et liaison par entraînement d'organes auxiliaires sur un moteur à combustion interne selon la revendication 4, **caractérisée en ce que** le carter de module (12) est formé de plusieurs pièces de carter, auquel cas les points de séparation et de liaison sont disposés et les pièces individuelles du carter sont conçues de telle manière qu'un montage ou une adaptation simple des organes auxiliaires (6, 7) ainsi que leurs liaisons d'entraînement (8, 9) et du pignon de gros diamètre (15) du train d'engrenages (13) soit possible et qu'également ces pièces de carter soient facilement assemblables entre elles.

6. Disposition et liaison par entraînement d'organes auxiliaires sur un moteur à combustion interne selon la revendication 5, **caractérisée en ce que** le premier compartiment (24) du carter de module (12) est délimité par deux pièces de carter en forme de pot (27, 28) reliées entre elles dans un plan de joint vertical en diagonal par le biais de brides et de liaisons vissées adéquates, **en ce que** la première pièce de carter avant (27) est fixée sur la face arrière du carter du volant (3), le cas échéant également au bloc cylindres (4) du moteur à combustion interne (1), **en ce que** les deux pièces de carter (27, 28) présentent des points de fixation (29, 30) à l'alignement, permettant la pose du pignon de gros diamètre (15) du train d'engrenages (13), et **en ce que** la deuxième pièce arrière de carter (28) présente des orifices (31, 32) permettant de positionner deux autres pièces de carter (33, 34) sur elle et de faire passer les deux arbres (19, 21) des liaisons d'entraînement (8, 9).

7. Disposition et liaison par entraînement d'organes auxiliaires sur un moteur à combustion interne selon la revendication 6, **caractérisée en ce que** la troisième pièce de carter (33) possède une paroi avant qui, conjointement avec une paroi arrière. (35) et une paroi extérieure cylindrique en section (36), délimite le deuxième compartiment (25) du carter de module (12), auquel cas la troisième pièce de carter (33) est bridée à la face arrière de la deuxième pièce de carter (28) et la dynamo (6) est fixée à la paroi arrière (35) de la troisième pièce de carter (33).

8. Disposition et liaison par entraînement d'organes auxiliaires sur un moteur à combustion interne selon les revendications 4 et 7, **caractérisée en ce que** la dynamo (6) avec un collet à avancée sur le devant (37) dépasse sur le deuxième compartiment (25), **en ce que** sur le collet (37) se trouve le premier embrayage à roue libre (17), lequel est, à son tour, entraîné de manière radiale de l'extérieur avec la couronne (38) du train planétaire (16). Cette couronne (38) est placée dans le deuxième compartiment (25) et avec les dents intérieures de laquelle les satellites (39) s'engrènent. Ceux-ci sont logés sur le porte-satellites (22) et sont reliés par un endentement (40) à l'arbre (41) de la dynamo (6). Egalement **caractérisée en ce que** le deuxième embrayage à roue libre (18) est disposé au niveau de l'extrémité libre de l'arbre (41) sur un support (42) en amont de l'endentement (40) et qu'il est entraîné de manière radiale de l'extérieur avec le porte-satellites (22).

9. Disposition et liaison par entraînement d'organes auxiliaires sur un moteur à combustion interne selon la revendication 6, **caractérisée en ce que** la quatrième pièce de carter (34) possède une paroi avant qui, conjointement à une paroi arrière (43) et une paroi extérieure (44), délimite le troisième compartiment (26), auquel cas la quatrième pièce de carter (34) est bridée avec sa paroi avant à la face arrière de la deuxième pièce de carter (28) et les parois délimitant le compartiment (26) sont conçues généralement en fonction du type de conception du compresseur d'air (7) à installer à l'intérieur.

10. Disposition et liaison par entraînement d'organes auxiliaires sur un moteur à combustion interne selon une ou plusieurs revendications mentionnées précédemment, **caractérisée en ce que** l'arbre (19) du compresseur d'air (7) disposé coaxialement par rapport à l'axe médian (11) de la même manière que l'arbre (41) de la dynamo (6) disposé coaxialement à l'axe médian (10) est prolongé à chacune des extrémités arrière et sert d'organe de transmission pour un organe auxiliaire (45) supplémentaire tel qu'une pompe de direction auxiliaire, une pompe de recirculation de liquide de refroidissement, un compresseur pour climatisateur, une pompe/moteur hydrostatique.

11. Disposition et liaison par entraînement d'organes auxiliaires sur un moteur à combustion interne selon les revendications 1 à 4 et 9, **caractérisée en ce que** le compresseur d'air (7) peut être entraîné avec un rapport de démultiplication d'env. i = 1,5 par l'intermédiaire du train d'engrenages (13, 14, 15) et le pignon (20) de la liaison d'entraînement (9).

12. Disposition et liaison par entraînement d'organes auxiliaires sur un moteur à combustion interne selon une ou plusieurs revendications, **caractérisée en ce que** le moteur à combustion interne (1) peut être lancé par la dynamo (6) en mode démarreur par le biais du train planétaire (16), du pignon (23) et du train d'engrenages (13, 14, 15), auquel cas les satellites (39) sont entraînés par l'endettement sur l'arbre (41) de la dynamo (6), auquel cas la couronne (38) est maintenue en place par la première roue libre (17), le porté-satellites (22) tourne avec un rapport d'env. i = 6 et le pignon disposé à l'extrémité libre de l'arbre (21) du porte-satellites met en mouvement le vilebrequin (2) du moteur à combustion interne (1) par le biais du train d'engrenages (13, 14, 15) avec un rapport supplémentaire d'env. i = 3,5, ce qui permet d'obtenir une démultiplication totale d'env. i_{ges} = 21 lors du démarrage, et auquel cas l'arbre (41) de la dynamo (6) tourne, lors du démarrage, plus vite avec un facteur d'env. 6 par rapport au porte-satellites (22) dans un même sens de rotation, et par conséquent le deuxième embrayage à roue libre (18) est constamment dépassé et ne se bloque pas.

13. Disposition et liaison par entraînement d'organes auxiliaires sur un moteur à combustion interne selon une ou plusieurs revendications de 1 à 10, **caractérisée en ce que** la dynamo (6) en mode alternateur peut être entraînée à partir du vilebrequin (2) du moteur à combustion interne (1) par le biais du train d'engrenages (13, 14, 15), du pignon (23) et du train planétaire (16), auquel cas le pignon (23) entraîne le porte-satellites (22), l'embrayage à roue libre (18) se bloque et ainsi l'arbre (41) de la dynamo (6) est accouplé au porte-satellites (22), auquel cas les satellites (39) ne tournent pas et la couronne (38) tourne dans le même sens de rotation ainsi qu'à la même vitesse de rotation que le porte-satellites (22) lorsque le premier embrayage à roue libre (17) ne se bloque pas et du fait qu'en mode alternateur un rapport d'env. i = 3,5 est suffisant.
